# EUROPÄISCHE PATENTSCHRIFT

(11) **EP 0 584 810 B1**
(45) Veröffentlichungstag und Bekanntmachung des Hinweises auf die Patenterteilung: **10.04.1996**
(21) Anmeldenummer: 93113587.5
(22) Anmeldetag: 25.08.1993
(51) Int. Cl.: F16D 65/56

(54) **Nachstell- und Zentriervorrichtung am Durchschiebeschloss einer Servo-Trommelbremse**
Adjusting and centering device at the shifting element of a servo drum brake
Dispositif de rajustage et de centrage sur l'élément poussé d'un servo-frein à tambour

(30) Priorität: 26.08.1992 DE 4228296
(43) Veröffentlichungstag der Anmeldung: 02.03.1994
(73) Patentinhaber: DEUTSCHE PERROT-BREMSE GmbH, D-68229 Mannheim (DE)
(72) Erfinder: Rupprecht, Bernd, D-68535 Edingen-Neckarhausen (DE)
(74) Vertreter: Patentanwälte Leinweber & Zimmermann

(56) Entgegenhaltungen:
- DE-A- 2 722 107
- DE-A- 4 017 096
- DE-C- 2 311 166
- DE-C- 3 112 550

## Beschreibung

Die Erfindung betrifft eine Nachstell- und Zentriervorrichtung an dem in einem ortsfesten Führungsbock gegen die Vorspannkraft einer Zentrierfeder axial verschiebbar angeordneten Durchschiebeschloß einer Servo-Trommelbremse, mit einer Nachstellmutter je Durchschieberichtung, in die ein drehfester, am jeweiligen Bremsbackenende angreifender Gewindebolzen eingeschraubt ist und die ein zu ihr koaxiales Nachstellzahnrad mit einer einseitig wirkenden Sperrverzahnung trägt, und mit zwei zweiarmigen Nachstellhebeln, die jeweils über einen zugeordneten Bolzen an dem Führungsbock schwenkbar gelagert und mit der Kraft einer Feder belastet sind, wobei der eine Arm jedes Nachstellhebels eine in die Sperrverzahnung eines der beiden Nachstellzahnräder eingreifende Klinke aufweist und der andere Arm jedes Nachstellhebels einen Anlagebereich aufweist, der sich an einem mit dem Durchschiebeschloß verbundenen Bauteil abstützen kann, wobei bei einer Axialverschiebung des Durchschiebeschlosses einer der beiden Nachstellhebel eine Schwenkbewegung gegenüber dem zugeordneten Nachstellzahnrad ausführt, wodurch bei einer Axialverschiebung des Durchschiebeschlosses eine Verdrehung dieses Nachstellzahnrades im Sinne eines Herausschraubens des Gewindebolzens erfolgt, wobei der Eingriff zwischen den Klinken und den Nachstellzahnrädern so ausgebildet ist, daß bei einer Bewegung einer Klinke infolge einer Betätigung der Bremse diese Klinke an einer steilen Flanke der Sperrverzahnung des betreffenden Nachstellzahnrades angreift und beim Lösen der Bremse an einer flachen Flanke der Sperrverzahnung angreift.

Eine Nachstell- und Zentriervorrichtung dieser Gattung ist in der DE-OS 40 17 096 offenbart. Dabei ist jedem Nachstellhebel ein Steuerhebel zugeordnet, wobei diese beiden Hebel mittels einer Zugfeder scharnierartig miteinander verbunden sind. Die Vorspannkraft der Zugfeder, die zu der Kraft der Zentrierfeder immer entgegengesetzt ist, belastet den Nachstellhebel gegen den Führungsbock. Dadurch stützt sich der Nachstellhebel mit einem vorgegebenen Anschlagspiel als Grundlüftspiel entweder an dem Führungsbock selbst oder an einem Teil (Bundbuchse) des Nachstellzahnrades ab.

Da die auf den Nachstellhebel einwirkende Kraft der Zugfeder immer in Richtung seiner Abstützung wirkt und damit der Kraft der Zentrierfeder entgegenwirkt, muß die Kraft der Zugfeder bei einer Axialverschiebung des Durchschiebeschlosses immer zusätzlich durch das Nachstellzahnrad bzw. durch die Bundbuchse überwunden werden, um ein Verschwenken des Nachstellhebels für den Nachstellvorgang einzuleiten. Ein weiterer Nachteil dieser bekannten Nachstellvorrichtung besteht darin, daß die Größe des Grundlüftspieles zwischen den Anschlägen des Nachstellhebels und dem zugeordneten Verschiebeteil vorgegeben ist. Eine Nachstellung erfolgt erst, wenn die Axialverschiebung des Durchschiebeschlosses das Grundlüftspiel übersteigt.

Aus der DE-PS 23 11 166 ist eine wegabhängig arbeitende Nachstellvorrichtung bekannt, die mittels Doppelhebel die Nachstellung vollzieht. Auch hier ist die Größe des Grundlüftspiels über Anschläge vorgegeben, und die auf den Doppelhebel ausgeübte Federkraft wirkt der Durchschiebebewegung entgegen.

Die DE-PS 31 12 550 zeigt eine wegabhängig arbeitende Nachstellvorrichtung, bei der die Nachstellhebel um 90° versetzt zueinander auf dem Führungsbock angeordnet sind. Bei einer Axialverschiebung des Durchschiebeschlosses erfolgt die Mitnahme der Hebel mittels einer Lasche, die mit dem Nachstellzahnrad gekoppelt ist und mit einem das Grundlüftspiel bestimmenden Spiel in eine Öffnung des Hebels eingreift.

Weitere wegabhängig arbeitende Nachstellvorrichtungen, bei denen die Nachstellhebel über Anschlagteile verschwenkt werden, sind in den US-PS 3 326 331, 3 712 425, 4 570 506 und 4 919 237 und in der GB-A-2 161 874 beschrieben.

Alle diese bekannten Nachstellvorrichtungen haben den Nachteil, daß die Mitnahme jedes Nachstellhebels bei der Axialverschiebung des Durchschiebeschlosses zwangsweise über das Bauteil (Bundbuchse, Nachstellzahnrad, Stift und andere) erfolgt, gegen das er sich unter der Vorspannkraft der zugeordneten Feder abstützt.

Der Erfindung liegt die Aufgabe zugrunde, eine Nachstellvorrichtung der eingangs genannten Gattung zu schaffen, bei der die Kraft der den Nachstellhebeln zugeordneten Feder der Axialverschiebung des Durchschiebeschlosses nicht entgegenwirkt und die Verschwenkung jedes Nachstellhebels im Sinne einer kraftabhängigen Nachstellung über eine zusätzliche Federkraftkomponente erfolgt, die in Richtung der Axialverschiebung wirkt.

Die Lösung dieser Aufgabe ist im Patentanspruch 1 angegeben.

Bei einer Bremsbetätigung und Axialverschiebung des Durchschiebeschlosses wirkt eine Federkraftkomponente im Sinne einer Nachstellung auf die Nachstellhebel, wobei jeder Nachstellhebel mit seiner Klinke gegen eine steile Flanke des zugeordneten Nachstellzahnrades drückt. Bei einem Ansteigen der Gewindereibung zwischen dem Gewindebolzen und der Nachstellmutter wird eine übermäßige Nachstellung verhindert, weil die auf die Nachstellhebel einwirkende Federkraftkomponente nicht ausreicht, um diese Gewindereibung im Sinne einer weiteren Verdrehung des Nachstellzahnrades zu überwinden, so daß sich die Abstützbereiche zwischen der Zentrierfeder und dem Nachstellhebel in Form einer Abstandsvergrößerung voneinander axial entfernen. Jeder Nachstellhebel ist "schwimmend" gelagert, so daß er unter der Vorspannkraft der zugeordneten Feder selbständig der Axialverschiebung folgt.

Der Anteil des Weges von der Axialverschiebung, um den sich die Zentrierfeder bei einer übermäßigen Bremsbetätigung vom Anlagebereich des Nachstellhebels weiter entfernt, wird somit nicht nachgestellt. Diese Abstandsvergrößerung bildet die kraftabhängige Kupplung. Die Federkräfte sind so gewählt, daß die Federkraft der Zentrierfeder größer ist als die von der Zug- oder Druckfeder auf den Nachstellhebel ausgeübte Kraft. Im Gegensatz zum Stand der Technik erfolgt eine Nachstellung nicht erst bei Überschreitung des Grundlüftspiels, sondern stufenlos über den Zahnsprung.

Zwei bevorzugte Ausführungsbeispiele der Erfindung sind in den Zeichnungen dargestellt und werden nachfolgend näher erläutert. Es zeigen:
Fig. 1 eine Ansicht einer Nachstell- und Zentriervorrichtung,
Fig. 2 eine Seitenansicht der Vorrichtung nach Fig. 1 von rechts,
Fig. 3 eine Draufsicht auf die Vorrichtung nach Fig. 1, teilweise im Schnitt,
Fig. 4 eine Ansicht einer zweiten Ausführungsform einer Nachstell- und Zentriervorrichtung, und
Fig. 5 eine Draufsicht auf die Vorrichtung nach Fig. 4.

Zwischen den der Spreizvorrichtung einer Servo-Trommelbremse gegenüberliegenden Bremsbackenenden ist ein mit dem Bremsenträger fest verbundener Führungsbock 1 angeordnet, der einen etwa U-förmigen Querschnitt aufweist. In diesen Führungsbock 1 ist ein Durchschiebeschloß gelagert, das in seiner Axialrichtung verschiebbar ist und hierbei die Bremsbetätigungskraft von der jeweiligen Primärbacke auf die Sekundärbacke überträgt. Das Durchschiebeschloß ist als Nachstell- und Zentriervorrichtung ausgebildet, die bei Abnützung des Bremsbelages bei einer der Bremsbacken ihre axiale Länge in Bezug zu ihrer zentrierten Stellung auf der verschlissenen Seite vergrößert und damit das Bremslüftspiel für jede der beiden Bremsbacken konstant hält.

An den Bremsbackenenden sitzt jeweils drehfest ein Gewindebolzen 2, der in eine der jeweiligen Bremsbacke zugeordnete Nachstellmutter 3 eingeschraubt ist. Die beiden Nachstellmuttern 3 sind in einer Verschiebehülse 4 drehbar gelagert und weisen jeweils einen Bund 5 auf, an dem sich die Verschiebehülse 4 abstützt.

In ihrem mittleren Bereich nimmt die Verschiebehülse 4 eine Zentrierfeder 6 auf. Diese Zentrierfeder 6 stützt sich an jedem Ende über eine Bundbuchse 7 oder über zwei geteilte Ringhälften am Führungsbock 1 ab. Die Zentrierfeder 6 bewirkt somit über die Bundbuchse bzw. die Ringhälften, die ihrerseits am Bund 5 der Nachstellmutter 3 anliegen, eine Zentrierung des aus den Gewindebolzen 2, den Nachstellmuttern 3 und der Verschiebehülse 4 bestehenden Durchschiebeschlosses. Die Bremskraft wird von dem der Primärbacke näheren Gewindebolzen 2 über die jeweilige Nachstellmutter, den Bund 5, die Verschiebehülse 4 und die auf der anderen Seite symmetrisch angeordneten gleichen Teile auf die Sekundärbacke übertragen.

An jeder Nachstellmutter 3 ist ein zu ihr koaxiales Nachstellzahnrad 8 befestigt, dessen Verzahnung aus einer einseitigen Sperrverzahnung 9 (Sägezahn) besteht. Die Richtung der Sperrverzahnung 9 hängt von der Richtung des Gewindes zwischen dem Gewindebolzen 2 und der Nachstellmutter 3 ab.

Die Anordnung ist in jedem Fall so getroffen, daß bei einer Axialverschiebung des Durchschiebeschlosses, also bereits bei der Bremsbetätigung, auf eine nachfolgend näher beschriebene Weise eine Drehbewegung des Nachstellzahnrades 8 in Richtung C bewirkt wird, die zu einem Herausschrauben des zugeordneten Gewindebolzens 2 und somit zu einer Nachstellung im Sinne eines Ausgleichs des Belagverschleisses führt.

Die einzelnen Bestandteile der Nachstellvorrichtung werden über die den Bremsbacken zugeordneten (nicht gezeigten) Rückzugsfedern zusammengehalten, die die Bremsbacken sowohl gegen die Spreizvorrichtung als auch gegen die Nachstellvorrichtung vorspannen. Die Kraft dieser Rückzugsfedern bestimmt somit auch die Größe der Gewindereibung zwischen dem Gewindebolzen 2 und der Nachstellmutter 3.

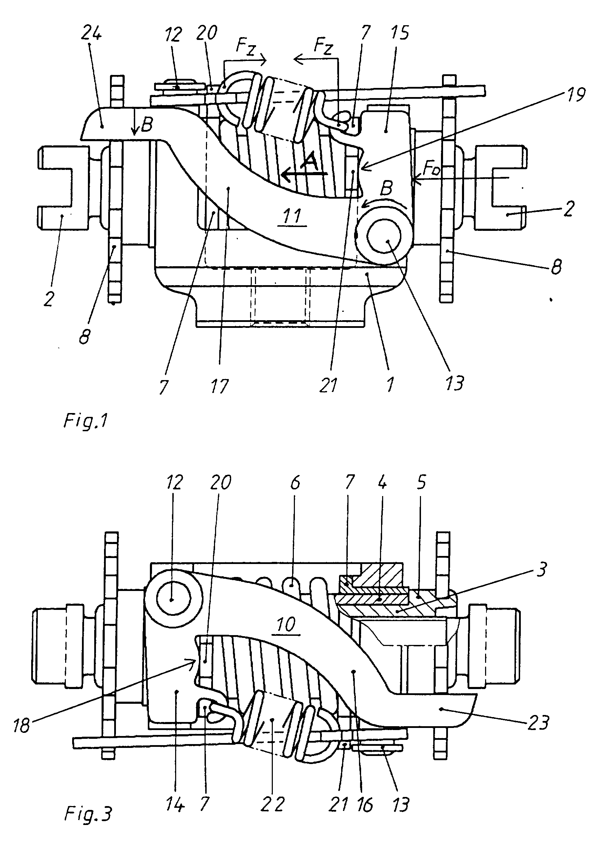

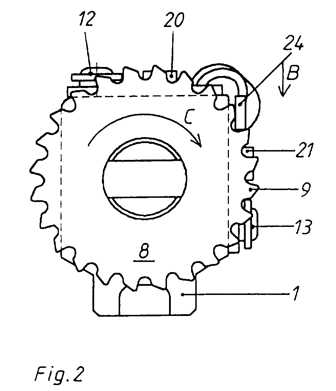

Bei der in den Fig. 1 bis 3 gezeigten Ausführungsform sind zwei L-förmige Nachstellhebel 10, 11 durch Bolzen 12, 13 am Führungsbock 1 verankert, so daß sie in zwei um 90° zueinander versetzten Ebenen verschwenkbar sind. Jeder Nachstellhebel 10, 11 weist einen kurzen Arm 14, 15 und einen langen Arm 16, 17 auf. Der kurze Arm 14, 15 jedes Nachstellhebels 10, 11 erstreckt sich von dem zugeordneten Bolzen 12, 13 über einen Bereich des U-förmigen Führungsbockes 1 hinweg. Der kurze Arm 14, 15 dient jedem Nachstellhebel 10, 11 sowohl zur Führung als auch zur Abstützung auf dem Führungsbock.

Jeder Nachstellhebel 10, 11 weist an seinem kurzen Arm 14, 15 einen zur Mitte der Zentrierfeder 6 zeigenden Anlagebereich 18, 19 auf. Dieser Anlagebereich 18, 19 kann sich entweder an dem radial auskragenden Bund der Bundbuchse 7 oder an einer sich radial erstreckenden Erweiterung 20, 21 der Bundbuchse 7 oder an einer größeren Scheibe, die sich zwischen der Zentrierfeder 6 und der Bundbuchse 7befindet, abstützen.

Zwischen den kurzen Armen 14, 15 der beiden Nachstellhebel 10, 11 ist diagonal eine Zugfeder 22 angeordnet, die die beiden Nachstellhebel mit der Federkraft F_{z} in Richtung der Zentrierfeder 6 vorspannt. Die langen Arme 16, 17 der beiden Nachstellhebel 10, 11 erstrecken sich über den Bereich der Zentrierfeder 6 und haben an ihrem freien Ende eine Klinke 23, 24, die an der steilen Flanke der Sperrverzahnung 9 anliegt. In Abhängigkeit vom Durchmesser der Nachstellzahnräder 8 können die Klinken 23, 24 gegenüber dem langen Arm 16, 17 abgekröpft sein.

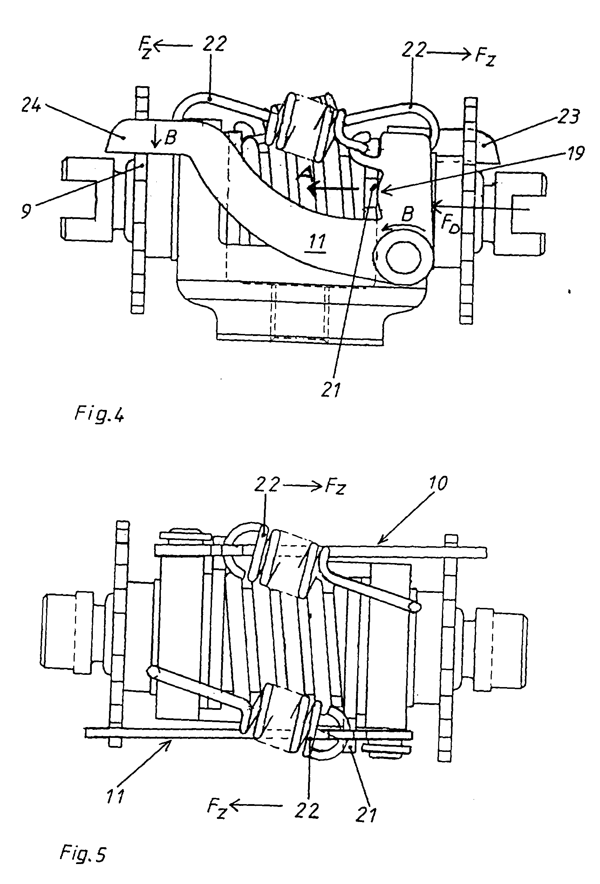

Bei der in den Fig. 4 und 5 gezeigten abgewandelten Ausführungsform ist der Grundaufbau der gleiche wie bei der vorstehend beschriebenen Ausführungsform, die Nachstellhebel 10, 11 sind jedoch auf gegenüberliegenden Seiten des Führungsbockes 1 angeordnet.

Die beschriebene Nachstellvorrichtung arbeitet folgendermaßen:

Wenn das Durchschiebeschloß beim Betätigen der Bremse gegen die Vorspannkraft der Zentrierfeder 6 in Richtung des Pfeils A von rechts nach links verschoben wird, dann drückt der rechte Gewindebolzen 2 über den Bund 5 der Nachstellmutter 3 die Verschiebehülse 4 und die Bundbuchse 7 in die gleiche Richtung. Dabei entfernt sich die radiale Erweiterung 21 der Bundbuchse 7 axial von der Anlage am Führungsbock 1.

Da der Nachstellhebel 11 mit seinem Anlagebereich 19 unter der Vorspannkraft der Zugfeder 22 an der radialen Erweiterung 21 in Anlage gehalten wird, wird durch die Verschiebung der Zentrierfeder 6 die Federkraftkomponente F_{z} der Zugfeder 22 auf den kurzen Arm 15 wirksam. Dadurch wird der Nachstellhebel 11 um den Bolzen 13 in Richtung des Pfeils B verschwenkt, so daß die Klinke 24 gegen die steile Flanke eines Sägezahns der Sperrverzahnung 9 drückt. Das Nachstellzahnrad 8 wird daher in Richtung des Pfeils C im Sinne eines Herausdrehens des Gewindebolzens 2 aus der Nachstellmutter 3 verdreht.

Bei Anlage des (nicht gezeigten) linken Bremsbackens an der Bremstrommel und bei ansteigenden Bremskräften erfolgt keine weitere Verdrehung bzw. Nachstellung, weil die Gewindereibung zwischen der Nachstellmutter 3 und dem linken Gewindebolzen 2 ansteigt und die Kraft der Zugfeder 22 übersteigt, die im Sinne eines Verschwenkens auf den Nachstellhebel 11 wirkt. Bei einer weiteren Axialverschiebung des Durchschiebeschlosses infolge einer Aufweitung oder Aufdehnung der Bremstrommel entfernt sich zwar die radiale Erweiterung der Bundbuchse 7 vom Anlagebereich 19 des Nachstellhebels 11 weiter in Richtung des Pfeils A, aber die Kraft der Zugfeder 22 reicht nicht mehr aus, daß der Nachstellhebel 11 dieser Verschiebung "schwimmend" folgen kann. Damit ist die Wirkung des Nachstellhebels 11 über die Abstandsvergrößerung zwischen der radialen Erweiterung 21 der Bundbuchse 7 und dem Anlagebereich 19 kraftabhängig ausgekuppelt.

Bei Bremsentlastung werden die Bestandteile des Durchschiebeschlosses durch die Zentrierfeder 6 wieder in ihre Ausgangslage gedrückt. Erst wenn dabei die Abstandsvergrößerung zwischen der radialen Erweiterung 21 der Bundbuchse 7 und dem Anlagebereich 19 des Nachstellhebels 11 überwunden wird, schiebt die Bundbuchse 7 den Nachstellhebel 11 gegen die Kraft der Zugfeder 22 nach rechts. Dabei wird der Nachstellhebel 11 verschwenkt, und seine Klinke 24 gleitet auf der flachen Flanke eines Sägezahns der Sperrverzahnung 9 um den Betrag, der dem Belagverschleiß beim Bremsvorgang entspricht. Diese Größe wird bei der folgenden Betätigung sofort nachgestellt.

Das Kräfteverhältnis zwischen der Zugfeder 22 und der den Bremsbacken zugeordneten (nicht gezeigten) Rückzugfeder ist so gewählt, daß ein unbeabsichtiges Zurückdrehen des Nachstellzahnrades 8 ausgeschlossen ist, wenn die Klinke 24 auf der flachen Flanke eines Zahnes der Sperrverzahnung 9 aufliegt bzw. in die nachfolgende Zahnlücke überspringt.

Die Nachstellung für die andere Bremsbacke erfolgt bei entgegengesetzter Bremsrichtung durch den anderen Nachstellhebel.

Die vorstehend beschriebenen Arbeitsweise der Nachstellvorrichtung trifft für die in den Fig. 4 und 5 gezeigte Abwandlung in gleicher Weise zu.

Die Größe des Lüftspiels wird einzig durch die Zahnteilung der Sperrverzahnung 9 vorgegeben, wodurch das Lüftspiel sehr klein gehalten werden kann und nahezu kostant ist. Dies wirkt sich positiv auf die gleichbleibende Größe des Betätigungshubes für den Bremsvorgang aus.

Bei einem Wechsel der Bremsbeläge müssen die Nachstellmuttern 3 wieder in die Vorrichtung zurückgeschraubt werden. Da jedes Nachstellzahnrad 8 in Sperrichtung zurückgedreht werden muß, muß die Klinke 24 mit einem Werkzeug aus der Zahnlücke angehoben werden, damit das Nachstellzahnrad entgegen der Richtung des Pfeils C verdreht werden kann.

Abweichend von den beiden gezeigten Ausführungsformen könnte den beiden Nachstellhebeln anstelle der Zugfeder auch eine Druckfeder zugeordnet sein, welche diese in Durchschieberichtung mit der Federkraftkomponente F_{D} zum Eingriff mit einem Teil des Durchschiebeschlosses belastet.

## Patentansprüche

1. Nachstell- und Zentriervorrichtung an dem in einem ortsfesten Führungsbock (1) gegen die Vorspannkraft einer Zentrierfeder (6) axial verschiebbar angeordneten Durchschiebeschloß einer Servo-Trommelbremse, mit einer Nachstellmutter (3) Durchschieberichtung, in die ein drehfester, am jeweiligen Bremsbackenende angreifender Gewindebolzen (2) eingeschraubt ist und die ein zu ihr koaxiales Nachstellzahnrad (8) mit einer einseitig wirkenden Sperrverzahnung (9) trägt, und mit zwei zweiarmigen Nachstellhebeln (10, 11), die jeweils über einen zugeordneten Bolzen (12, 13) an dem Führungsbock (1) schwenkbar gelagert und mit der Kraft zen einer Feder (22) belastet sind, wobei der eine Arm (16, 17) jedes Nachstellhebels (10,11) eine in die Sperrverzahnung eines der beiden Nachstellzahnräder (8) eingreifende Klinke (23, 24) aufweist und der andere Arm (14, 15) jedes Nachstellhebels einen Anlagebereich (18, 19) aufweist, der sich an einem mit dem Durchschiebeschloß verbundenen Bauteil (20, 21) abstützen kann, wobei bei einer Axialverschiebung (10, 11) des Durchschiebeschlosses einer der beiden Nachstellhebel eine Schwenkbewegung gegenüber dem zugeordneten Nachstellzahnrad (8) ausführt, wodurch bei einer Axialverschiebung des Durchschiebeschlosses eine Verdrehung dieses Nachstellzahnrades (8) im Sinne eines Herausschraubens des Gewindebolzens (2) erfolgt, wobei der Eingriff zwischen den Klinken (23, 24) und den Nachstellzahnrädern (8) so ausgebildet ist, daß bei einer Bewegung einer Klinke (23, 24) infolge einer Betätigung der Bremse diese Klinke (23, 24) einer steilen Flanke der Sperrverzahnung (9) des betreffenden Nachstellzahnrades (8) angreift und beim Lösen der Bremse an einer flachen Flanke der Sperrverzahnung (9) angreift, dadurch **gekennzeichnet,** daß die Feder (22) an dem den Anlagebereich (18, 19) aufweisenden Arm (14, 15) jedes Nachstellhebels (10, 11) angreift und diesen an dem mit dem Durchschiebeschloß (2, 3, 4) verbundenen Bauteil (20, 21) in Anlage hält, so daß sich die Feder (22) bei einer Axialverschiebung dieses Bauteils (20, 21) entspannt.

2. Vorrichtung nach Anspruch 1, dadurch **gekennzeichnet,** daß die beiden Nachstellhebel (10, 11) an zwei benachbarten Seiten des Führungsbockes (1) angelenkt sind.

3. Vorrichtung nach Anspruch 1, dadurch **gekennzeichnet**, daß die beiden Nachstellhebel (10, 11) an zwei gegenüberliegenden Seiten des Führungsbockes (1) angelenkt sind.

4. Vorrichtung nach einem der vorhergehenden Ansprüche, dadurch **gekennzeichnet**, daß sich die Zentrierfeder (6) an jedem Ende über eine Bundbuchse (7) am Führungsbock (1) abstützt und daß das mit dem Durchschiebeschloß (2, 3, 4) verbundene Bauteil eine sich radial erstreckende Erweiterung (20, 21) der betreffenden Bundbuchse (7) ist.

5. Vorrichtung nach einem der vorhergehenden Ansprüche, dadurch **gekennzeichnet**, daß die an jedem Nachstellhebel (10, 11) angreifende Feder eine Zugfeder (22) ist.

6. Vorrichtung nach einem der vorhergehenden Ansprüche, dadurch **gekennzeichnet**, daß die Kraft der an jedem Nachstellhebel (10, 11) angreifenden Feder (22) kleiner ist als die Kraft der Zentrierfeder (6) und so bemessen ist, daß sie die bei einer übermäßigen Bremsbetätigung auftretende Gewindereibung der Nachstellmutter (3) nicht übersteigt, so daß eine weitere Verdrehung des Nachstellhebels (10, 11) unterbleibt und das mit dem Durchschiebeschloß (2, 3, 4) verbundene Bauteil (20, 21) sich vom Anlagebereich (18, 19) dieses Nachstellhebels (10, 11) entfernt.

## Claims

1. Adjusting and centring device on the sliding-advance lock of a servo drum brake, the said sliding-advance lock being arranged in a fixed guide block (1) so as to be axially displaceable counter to the pretensioning force of a centring spring (6), with, for each sliding-advance direction, an adjusting nut (3), into which a rotationally fixed threaded bolt (2) engaging on the respective brake-shoe end is screwed and which carries an adjusting gearwheel (8) coaxial relative to the said adjusting nut (3) and having a locking toothing (9) acting on one side, and with two two-armed adjusting levers (10, 11) which are each pivotably mounted on the guide block (1) via an associated bolt (12, 13) and which are loaded with the force of a spring (22), one arm (16, 17) of each adjusting lever (10, 11) having a pawl (23, 24) engaging into the locking toothing of one of the two adjusting gearwheels (8), and the other arm (14, 15) of each adjusting lever having a bearing region (18, 19) which can be supported on a component (20, 21) connected to the sliding-advance lock, in the event of an axial displacement (10, 11) of the sliding-advance lock one of the two adjusting levers executing a pivoting movement relative to the associated adjusting gearwheel (8), with the result that, during an axial displacement of the sliding-advance lock, a rotation of this adjusting gearwheel (8) takes place with the effect of unscrewing the threaded bolt (2), the engagement between the pawls (23, 24) and the adjusting gearwheels (8) being designed in such a way that, in the event of a movement of a pawl (23, 24) as the result of an actuation of the brake, this pawl (23, 24) engages on a steep flank of the locking toothing (9) of the respective adjusting gearwheel (8) and, when the brake is released, engages on a flat flank of the locking toothing (9), characterized in that the spring (22) engages on that arm (14, 15) of each adjusting lever (10, 11) having the bearing region (18, 19) and keeps the said arm in bearing contact on the component (20, 21) connected to the sliding-advance lock (2, 3, 4), so that the spring (22) relaxes during an axial displacement of this component (20, 21).

2. Device according to Claim 1, characterized in that the two adjusting levers (10, 11) are articulated on two adjacent sides of the guide block (1).

3. Device according to Claim 1, characterized in that the two adjusting levers (10, 11) are articulated on two opposite sides of the guide block (1).

4. Device according to one of the preceding claims, characterized in that the centring spring (6) is supported at each end on the guide block (1) via a boss bush (7), and in that the component connected to the sliding-advance lock (2, 3, 4) is a radially extending widening (20, 21) of the respective boss bush (7).

5. Device according to one of the preceding claims, characterized in that the spring engaging on each adjusting lever (10, 11) is a tension spring (22).

6. Device according to one of the preceding claims, characterized in that the force of the spring (22) engaging on each adjusting lever (10, 11) is lower than the force of the centring spring (6) and has a magnitude such that it does not exceed the thread friction of the adjusting nut (3) occurring during excessive brake actuation, so that a further rotation of the adjusting part (10, 11) is prevented and the component (20, 21) connected to the sliding-advance lock (2, 3, 4) moves away from the bearing region (18, 19) of this adjusting lever (10, 11).

## Revendications

1. Dispositif de rajustement et de centrage sur l'élément poussé d'un servo-frein à tambour monté coulissant axialement, dans un chevalet de guidage fixe (1), à l'encontre de la force de précontrainte d'un ressort de centrage (6), dispositif comportant un écrou de rajustement (3) selon le sens de poussée, dans lequel est vissé un boulon fileté (2), fixe en rotation, attaquant l'extrémité de mâchoire de frein respective et qui porte une roue dentée de rajustement (8), qui lui est coaxiale, munie d'une denture d'arrêt (9) agissant d'un côté, et deux leviers de rajustement (10, 11) à deux bras, lesquels leviers sont montés pivotants respectivement par un boulon associé (12, 13) sur le chevalet de guidage (1) et qui sont soumis à la force d'un ressort (22), un bras (16, 17) de chaque levier de rajustement (10, 11) comportant un cliquet (23, 24) venant en prise dans la denture d'arrêt de l'une des deux roues dentées de rajustement (8) et l'autre bras (14, 15) de chaque levier de rajustement comportant une zone d'appui (18, 19), qui peut s'appuyer contre une pièce (20, 21) reliée à l'élément poussé, de sorte que lors d'un coulissement axial de l'élément poussé l'un des deux leviers de rajustement exécute un mouvement de pivotement vis-à-vis de la roue dentée de rajustement (8) associée, grâce à quoi lors d'un coulissement axial de l'élément poussé une rotation de cette roue dentée de rajustement (8) se produit dans le sens d'un dévissage du boulon fileté (2), la venue en prise entre les cliquets (23, 24) et les roues dentées de rajustement (8) étant agencée de sorte que lors d'un mouvement d'un cliquet (23, 24), par suite d'un actionnement du frein, ce cliquet (23, 24) attaque un flanc raide de la denture d'arrêt (9) de la roue dentée de rajustement (8) correspondante et lors du relâchement du frein attaque un flanc plat de la denture d'arrêt (9), caractérisé par le fait que le ressort (22) attaque le bras (14, 15) de chaque levier de rajustement (10, 11) comportant la zone d'appui (18, 19) et maintient ce bras en appui contre la pièce (20, 21) reliée à l'élément poussé (2, 3, 4), de sorte que le ressort (22) lors d'un coulissement axial de cette pièce (20, 21) se détend.

2. Dispositif selon la revendication 1, caractérisé par le fait que les deux leviers de rajustement (10, 11) sont articulés sur deux côtés voisins du chevalet de guidage (1).

3. Dispositif selon la revendication 1, caractérisé par le fait que les deux leviers de rajustement (10, 11) sont articulés sur deux côtés opposés du chevalet de guidage (1).

4. Dispositif selon l'une des revendications précédentes, caractérisé par le fait que le ressort de centrage (6) s'appuie à chaque extrémité par une douille à collet (7) contre le chevalet de guidage (1) et que la pièce reliée à l'élément poussé (2, 3, 4) est une extension (20, 21), s'étendant radialement, de la douille à collet (7) correspondante.

5. Dispositif selon l'une des revendications précédentes, caractérisé par le fait que le ressort attaquant chaque levier de rajustement (10, 11) est un ressort de traction (22).

6. Dispositif selon l'une des revendications précédentes, caractérisé par le fait que la force du ressort (22) attaquant chaque levier de rajustement (10, 11) est plus petite que la force du ressort de centrage (6) et est déterminée de telle sorte qu'elle ne dépasse pas le frottement de filetage de l'écrou de rajustement (3) apparaissant lors d'un actionnement de frein excessif, de sorte qu'une rotation supplémentaire du levier de rajustement (10, 11) ne se produit pas et que la pièce (20, 21) reliée à l'élément poussé (2, 3, 4) s'éloigne de la zone d'appui (18, 19) de ce levier de rajustement (10, 11).
